# EUROPEAN PATENT SPECIFICATION

(11) **EP 3 450 073 B1**
(45) Date of publication and mention of the grant of the patent: **21.10.2020**
(21) Application number: 18191371.6
(22) Date of filing: 29.08.2018
(51) Int. Cl.: B23D 45/02, B24B 27/06, B26D 1/18, B26D 3/16, B26D 5/00, B26D 5/08, B26D 5/06, B23D 45/12, B23D 47/02

(54) **CUTTING-OFF MACHINE TO CUT SECTION BARS, IN PARTICULAR MADE OF ALUMINIUM, LIGHT ALLOYS, PVC OR THE LIKE**
TRENNMASCHINE ZUM SCHNEIDEN VON PROFILSTANGEN, INSBESONDERE AUS ALUMINIUM, LEICHTMETALL, PVC ODER DERGLEICHEN
MACHINE DE DÉCOUPE DE BARRES DE SECTION, FABRIQUÉES EN PARTICULIER EN ALUMINIUM, ALLIAGES LÉGERS, PVC OU ANALOGUES

(30) Priority: 29.08.2017 IT 201700097011
(43) Date of publication of application: 06.03.2019
(73) Proprietor: F.O.M. Industrie S.r.l., 47841 Cattolica (RN) (IT)
(72) Inventor: LATTANZI, Lorenzo, 61121 PESARO (PU) (IT)
(74) Representative: Manconi, Stefano

(56) References cited:
- EP-A1- 3 175 950
- CN-A- 105 710 438
- GB-A- 2 438 285

## Description

### TECHNICAL FIELD

The present invention relates to a cutting-off machine to cut section bars, in particular made of aluminium, light alloys, PVC or the like.

### BACKGROUND ART

In the field of section bar cutting, cutting-off machines are known, which comprise a base defining a horizontal support surface for a section bar; and a cutting unit provided with a support frame, which has a vertical support surface for the section bar and is mounted so as to rotate, relative to the base, around a fulcrum axis perpendicular to the vertical support surface.

The cutting unit further comprises a circular cutting blade, which is mounted on the support frame so as to rotate around a rotation axis transverse to the fulcrum axis, and a feeding device to move the cutting blade through the aforesaid horizontal and vertical support surfaces.

The vertical support surface has an opening, which is obtained above the horizontal support surface, so as to permit the passage of the feeding device when the rotation axis of the cutting blade is moved along the horizontal support surface, and is normally associated with a closing shutter.

Known cutting-off machines of the type described above are affected by some drawbacks which are mainly due to the fact that, in order to allow the feeding device to move through the opening and above the horizontal support surface, the section bars must have, perpendicularly to the horizontal support surface, relatively small dimensions below a given threshold value. As a consequence, known cutting-off machines of the type described above have a relatively reduced flexibility. A cutting-off machine according to the preamble of claim 1 is known from the patent publication EP 3 175 950 A1.

### DISCLOSURE OF INVENTION

It is an object of the present invention to provide a cutting-off machine to cut section bars, in particular made of aluminium, light alloys, PVC or the like, which is designed to eliminate the aforementioned drawbacks in a straightforward, relatively low-cost manner.

According to the present invention, there is provided a cutting-off machine to cut section bars, in particular made of aluminium, light alloys, PVC or the like, according to the appended claims.

### BRIEF DESCRIPTION OF THE DRAWINGS

The invention will now be described with reference to the accompanying drawings, showing a non-limiting embodiment thereof, wherein:
figures 1 and 2 are two schematic perspective views, with parts removed for greater clarity, of a preferred embodiment of the cutting-off machine according to the present invention;
figures 3 and 4 are similar to figures 1 and 2 and show a first detail of the cutting-off machine in two different operating positions; and
figures 5 and 6 are similar to figures 3 and 4 and show a second detail of the cutting-off machine in two different operating positions.

### BEST MODE FOR CARRYING OUT THE INVENTION

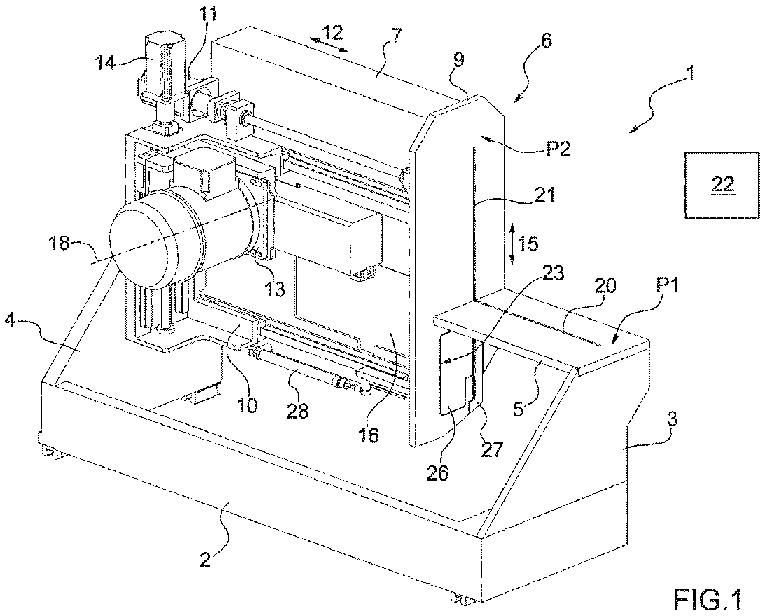

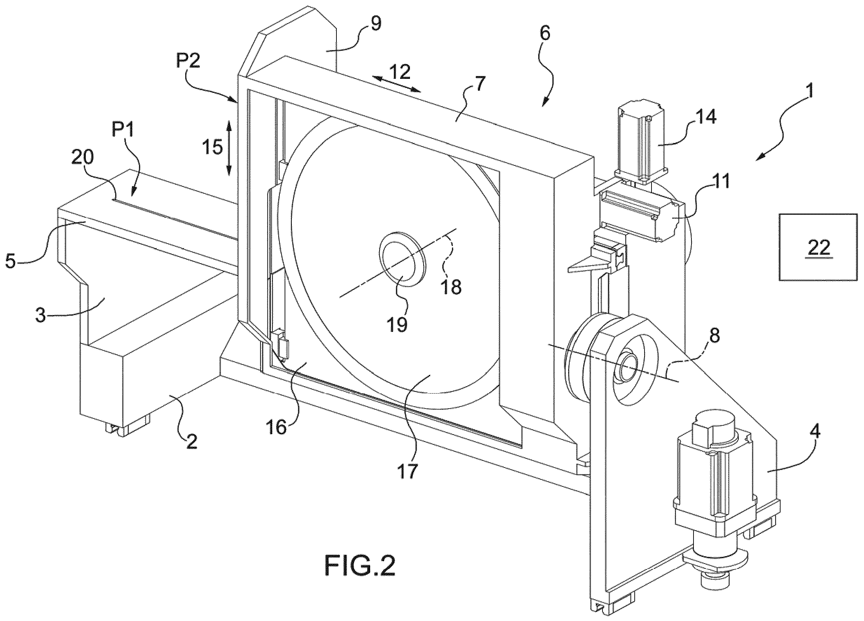

With reference to figures 1 and 2, number 1 indicates, as a whole, a cutting-off machine to process section bars (which are not shown), in particular made of aluminium, light alloys, PVC or the like.

The cutting-off machine 1 comprises a base 2, which is substantially U-shaped and is provided with two vertical uprights 3, 4, which are substantially parallel to one another.

The base 2 comprises a support table 5, which projects from the upright 3 towards the upright 4 and defines a substantially horizontal support surface P1 for at least one section bar (which is not shown).

The cutting-off machine 1 further comprises a cutting unit 6, which extends between the upright 4 and the table 5 and is provided with a support frame 7 with a substantially square shape.

The frame 7 is coupled to the upright 4 in a rotary manner so as to rotate, relative to the base 2, around a rotation axis 8 substantially parallel to the surface P1 and has a side plate 9 defining a substantially vertical support surface P2 for at least one section bar (which is not shown).

The unit 6 comprises a first slide 10, which is coupled to the frame 7 in a sliding manner so as to make, relative to the frame 7 and due to the thrust of an operating device 11, straight movements in a horizontal direction 12, which is parallel to the surface P1 and perpendicular to the surface P2.

The unit 6 further has a second slide 13, which is coupled to the slide 10 in a sliding manner so as to make, relative to the slide 10 and due to the thrust of an operating device 14, straight movements in a direction 15, which is transverse to the direction 12 and whose orientation depends on the position of the frame 7 around the axis 8.

The unit 6 is further provided with a guide plate 16, which is coupled to the frame 7 is a sliding manner so as to make, relative to the frame 7 and due to the thrust of the slide 13, straight movements in the direction 15 and is engaged by the slide 13 in a sliding manner following the movement of the slide 10 in the direction 12.

The slide 13 supports a circular cutting blade 17, which extends parallel to the plate 16 and is mounted so as to rotate around a rotation axis 18, which is orthogonal to the directions 12 and 15 and whose orientation depends on the position of the frame 7 around the axis 8.

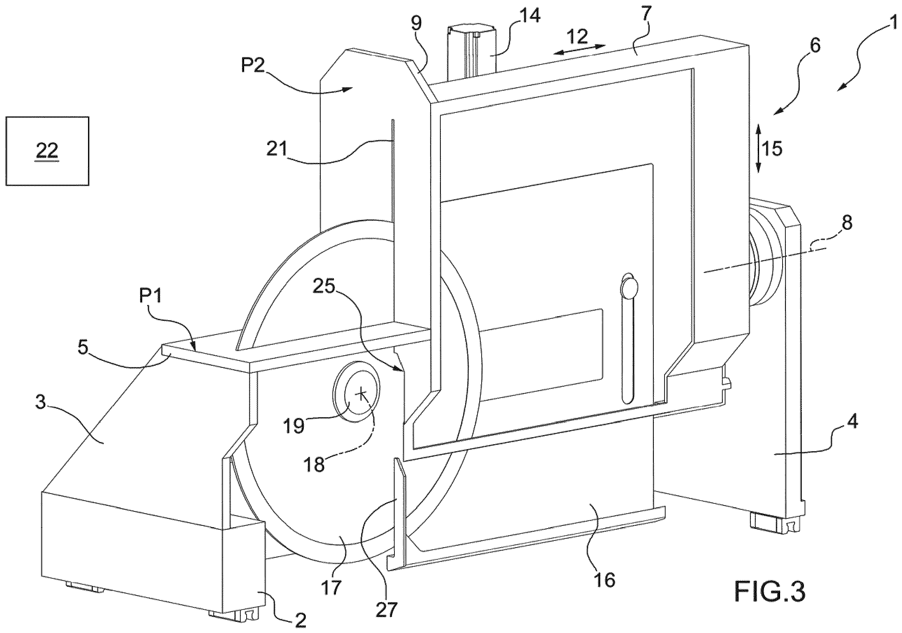

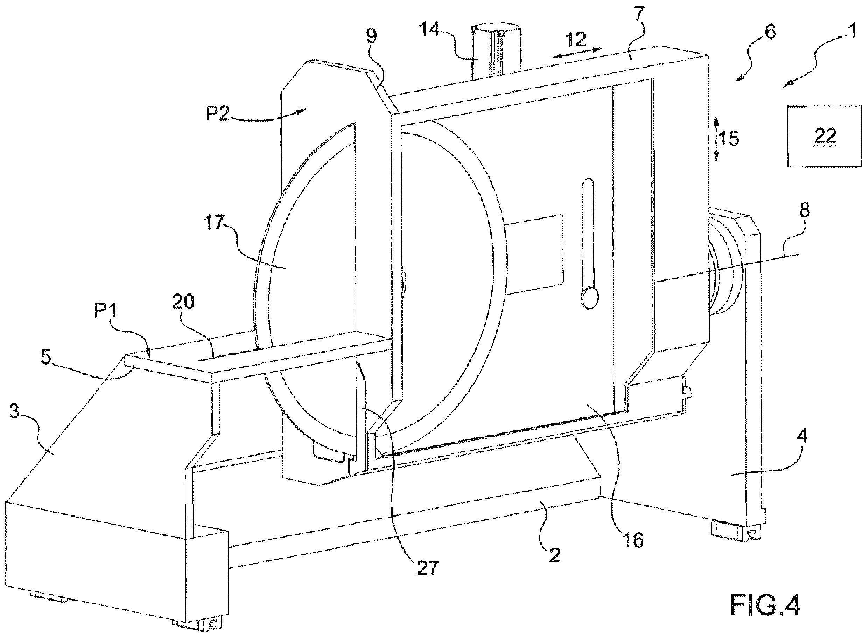

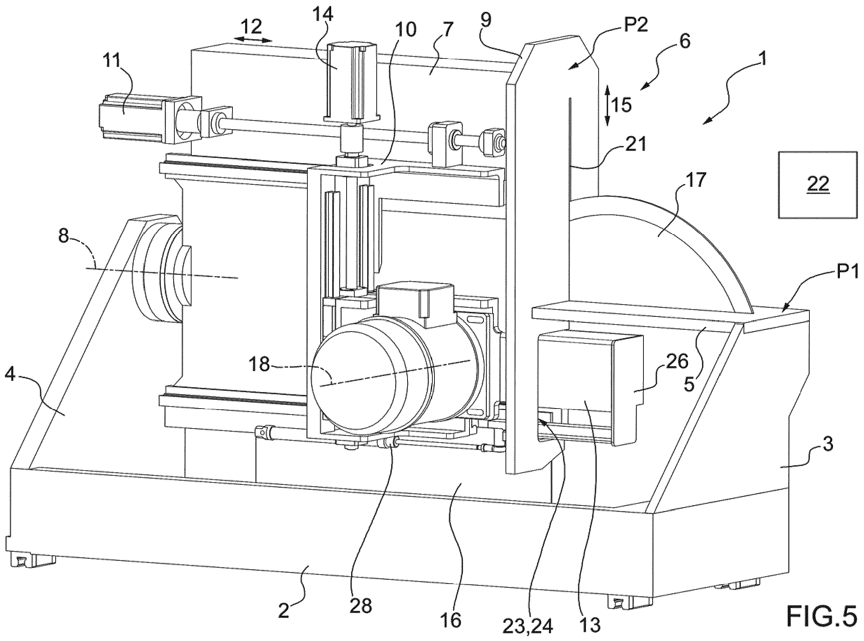

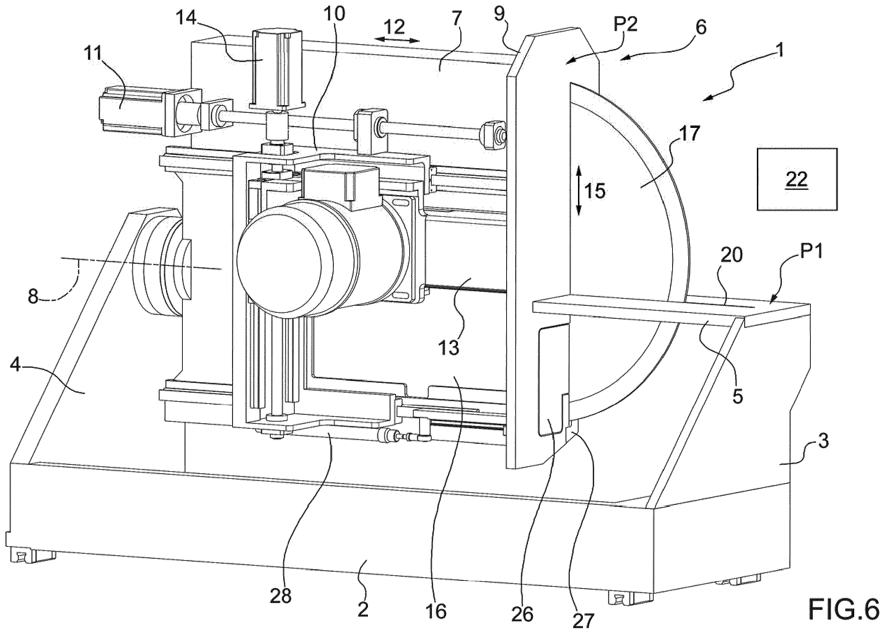

The blade 17 is moved by the slide 13 in the direction 15 between a lowered position (figures 3 and 5) and a lifted position (figures 4 and 6).

The blade 17 is locked on the slide 13 by a fixing disc 19 coaxial to the axis 18 and is moved by the slides 10 and 13 through a slit 20 made in the table 5 and through a slit 21 made in the plate 9.

The frame 7 is delimited by a closing plate (not shown), which is mounted on the opposite side of the plate 16 relative to the blade 17 and defines, together with the frame 7 and the plate 16, a containing chamber (not shown) for the blade 17, which is connected to a sucking device designed to suck shavings and/or swarf generated by the blade 17.

The cutting-off machine 1 further comprises an electronic control unit 22, which is configured to combine the movements of the slide 10 in the direction 12 and of the slide 13 in the direction 15 and to selectively move the axis 18 of the blade 17 along the vertical support surface P2, in particular on the outside of the horizontal support surface P1, and/or along the horizontal support surface P1, in particular under the horizontal support surface P1.

According to figures 3 and 4, the vertical support surface P2 has an opening 23, which is obtained through the plate 9 so as to entirely extend under the horizontal support surface P1 when the axis 18 is parallel to the horizontal support surface P1.

The opening 23 comprises two portions 24, 25 arranged on opposite sides of the slit 21 and designed to be engaged in a sliding manner by the slide 13 and by the disc 19, respectively, when the blade 17 is arranged in its lowered position and is moved in the direction 12.

The opening 23 is associated, in this particular case, with a first shutter 26 to close the portion 24 and with a second shutter 27 to close the portion 25.

The shutter 26 defines part of the surface P2 and is fixed to a free end of an output rod of an actuator cylinder 28 mounted on the frame 7 parallel to the direction 12.

The shutter 26 is moved by the cylinder 28 in the direction 12 between an extracted opening position (figure 5), in which the portion 24 is suited to be engaged by the slide 13 in a sliding manner, and a retracted closing position (figure 6), in which the portion 24 is closed by the shutter 26.

The shutter 27 defines part of the surface P2, is obtained in the plate 16 and is moved by the plate 16 in the direction 15 between a lowered opening position (figure 3), in which the portion 25 is suited to be engaged by the disc 19 in a sliding manner, and a lifted closing position (figure 4), in which the portion 25 is closed by the shutter 27.

Since, when the rotation axis 18 of the cutting blade 17 is parallel to the horizontal support surface P1, the opening 23 entirely extends under the horizontal support surface P1, the section bars (not shown) can have, perpendicularly to the horizontal support surface P1, reactively large dimensions, thus ensuring a relatively high flexibility of the cutting-off machine 1.

According to some embodiments that are not shown:
the shutters 26, 27 are moved between their closing and opening positions differently from what described above, for example through a rotation movement;
the shutters 26, 27 are eliminated and replaced by one single closing shutter, which has the shape of a fork with an upward concavity, extends around the blade 17 and comprises two arms configured to close one the portion 24 and the other one the portion 25;
the shutter 26 is moved from its closing position to its opening position by the slide 13 and from its opening position to its closing position by means of a spring or an actuator cylinder.

## Claims

1. A cutting-off machine to cut section bars, in particular made of aluminium, light alloys, PVC or the like, the cutting-off machine comprising a base (2) defining a horizontal support surface (P1) for a section bar; and a cutting unit (6) comprising, in turn, a support frame (7), which is mounted so as to rotate around a first rotation axis (8), a vertical support surface (P2) for the section bar, which is obtained on the support frame (7) and extends under the horizontal support surface (P1), a circular cutting blade (17), which is mounted on the support frame (7) so as to rotate around a second rotation axis (18), a feeding device (10, 13), which is mounted on the support frame (7) so as to move the cutting blade (17) through the vertical support surface (P2) in a first feeding direction (12), and an opening (23), which is obtained through the vertical support surface (P2) for the passage of the feeding device (10, 13); and being **characterized in that** the opening (23) at least partly extends under the horizontal support surface (P1).

2. A cutting-off machine according to claim 1, wherein the opening (23) entirely extends under the horizontal support surface (P1), when the second rotation axis (18) is parallel to the horizontal support surface (P1).

3. A cutting-off machine according to claim 1 or 2, wherein the cutting unit (6) comprises, furthermore, at least one shutter (26, 27) to close said opening (23).

4. A cutting-off machine according to claim 3, wherein the shutter (26, 27) is movable between an opening position and a closing position to open and close, respectively, said opening (23, 25).

5. A cutting-off machine according to claim 4, wherein the shutter (26, 27) is movable from its closing position to its opening position due to the thrust of the feeding device (10, 13).

6. A cutting-off machine according to claim 5 and comprising, furthermore, an operating device to move the shutter (26, 27) from its opening position to its closing position.

7. A cutting-off machine according to claim 4 and comprising, furthermore, an operating device (16, 28) to move the shutter (26, 27) between its opening position and its closing position.

8. A cutting-off machine according to any one of the preceding claims, wherein the feeding device (10, 13) comprises a first slide (10), which is movable in said first feeding direction (12), and a second slide (13), which is movable in a second feeding direction (15), which is substantially transverse to the first feeding direction (12).

9. A cutting-off machine according to claim 8, wherein the first slide (10) is mounted on the support frame (7), the second slide (13) is mounted on the first slide (10), and the cutting blade (17) is mounted on the second slide (13).

10. A cutting-off machine according to claim 8 or 9, wherein the cutting unit (6) comprises, furthermore, a guide plate (16), which is coupled to the support frame (7) in a sliding manner, so as to move in the second feeding direction (15) due to the thrust of the second slide (13), and is engaged by the second slide (13) in a sliding manner following the movement of the first slide (10) in the first feeding direction (12) .

11. A cutting-off machine according to any one of the claims from 8 to 10 and comprising, furthermore, an electronic control unit (22), which is configured to combine the movements of said first and second slide (10, 13) in said first and second direction (12, 15) so as to selectively move the second rotation axis (18) along the vertical support surface (P2), in particular on the outside of the horizontal support surface (P1), and/or along the horizontal support surface (P1), in particular under the horizontal support surface (P1).

12. A cutting-off machine according to any one of the preceding claims, wherein the opening (23) comprises a first portion (24) and a second portion (25), which are arranged on opposite sides of the cutting blade (17).

13. A cutting-off machine according to claim 12, wherein the cutting unit (6) comprises, furthermore, a fixing disc (19), which locks the cutting blade (17) on the feeding device (10, 13) and engages the second portion (25) in a sliding manner.

14. A cutting-off machine according to claim 12 or 13, wherein the cutting unit (6) comprises a first shutter (26) to close the first portion (24) and a second shutter (27) to close the second portion (25).

15. A cutting-off machine according to claim 12 or 13, wherein the cutting unit (6) comprises a shutter, which has the shape of a fork, extends around the cutting blade (17) and comprises two arms to close the first portion (24) and the second portion (25), respectively.

16. A cutting-off machine according to any one of the preceding claims, wherein the support frame (7) has a containing chamber, which houses - on the inside - the cutting blade (17) and is connected to a pneumatic suction device.

## Patentansprüche

1. Trennmaschine zum Schneiden von Profilstangen, insbesondere aus Aluminium, Leichtmetall, PVC oder dergleichen, wobei die Trennmaschine eine Basis (2), die eine horizontale Stützfläche (P1) für eine Profilstange definiert; und eine Schneideeinheit (6) umfasst, die ihrerseits einen Stützrahmen (7), der so befestigt ist, dass er sich um eine erste Drehachse (8) dreht, eine vertikale Stützfläche (P2), die an dem Stützrahmen (7) erhalten wird und sich unter der horizontalen Stützfläche (P1) erstreckt, eine kreisförmige Schneidklinge (17), die so an dem Stützrahmen (7) befestigt ist, dass sie sich um eine zweite Drehachse (18) dreht, eine Zuführvorrichtung (10, 13), die so an dem Stützrahmen (7) befestigt ist, dass sie die Schneidklinge (17) in einer ersten Zuführrichtung (12) durch die vertikale Stützfläche (P2) bewegt, und eine Öffnung (23), die durch die vertikale Stützfläche (P2) hindurch für den Durchgang der Zuführvorrichtung (10, 13) erhalten wird, umfasst; und **dadurch gekennzeichnet ist, dass** sich die Öffnung (23) zumindest teilweise unter der horizontalen Stützfläche (P1) erstreckt.

2. Trennmaschine nach Anspruch 1, wobei sich die Öffnung (23) vollständig unter der horizontalen Stützfläche (P1) erstreckt, wenn die zweite Drehachse (18) parallel zu der horizontalen Stützfläche (P1) ist.

3. Trennmaschine nach Anspruch 1 oder 2, wobei die Schneideeinheit (6) außerdem mindestens eine Verschlussklappe (26, 27) zum Schließen der Öffnung (23) umfasst.

4. Trennmaschine nach Anspruch 3, wobei die Verschlussklappe (26, 27) zwischen einer Öffnungsstellung und einer Schließstellung zum jeweiligen Öffnen und Schließen der Öffnung (23, 25) bewegbar ist.

5. Trennmaschine nach Anspruch 4, wobei die Verschlussklappe (26, 27) aufgrund des Schubs der Zuführvorrichtung (10, 13) von ihrer Schließstellung in ihre Öffnungsstellung bewegbar ist.

6. Trennmaschine nach Anspruch 5, und die außerdem eine Betätigungsvorrichtung zum Bewegen der Verschlussklappe (26, 27) von ihrer Öffnungsstellung in ihre Schließstellung umfasst.

7. Trennmaschine nach Anspruch 4, und die außerdem eine Betätigungsvorrichtung (16, 28) zum Bewegen der Verschlussklappe (26, 27) zwischen ihrer Öffnungsstellung und ihrer Schließstellung umfasst.

8. Trennmaschine nach einem beliebigen der vorhergehenden Ansprüche, wobei die Zuführvorrichtung (10, 13) einen ersten Schieber (10), der in der ersten Zuführrichtung (12) bewegbar ist, und einen zweiten Schieber (13), der in einer zweiten Zuführrichtung (15) bewegbar ist, die im Wesentlichen quer zu der ersten Zuführrichtung (12) ist, umfasst.

9. Trennmaschine nach Anspruch 8, wobei der erste Schieber (10) an dem Stützrahmen (7) befestigt ist, der zweite Schieber (13) an dem ersten Schieber (10) befestigt ist und die Schneidklinge (17) an dem zweiten Schieber (13) befestigt ist.

10. Trennmaschine nach Anspruch 8 oder 9, wobei die Schneideeinheit (6) außerdem eine Führungsplatte (16) umfasst, die mit dem Stützrahmen (7) so gleitend verbunden ist, dass sie sich aufgrund des Schubs des zweiten Schiebers (13) in der zweiten Zuführrichtung (15) bewegt, und die infolge der Bewegung des ersten Schiebers (10) in der ersten Zuführrichtung (12) von dem zweiten Schieber (13) gleitend in Eingriff genommen wird.

11. Trennmaschine nach einem beliebigen der Ansprüche 8 bis 10, und die außerdem eine elektronische Steuer- bzw. Regeleinheit (22) umfasst, die so ausgestaltet ist, dass sie die Bewegungen des ersten und des zweiten Schiebers (10, 13) in der ersten und der zweiten Richtung (12, 15) kombiniert, um wahlweise die zweite Drehachse (18) entlang der vertikalen Stützfläche (P2), insbesondere an der Außenseite der horizontalen Stützfläche (P1), und/oder entlang der horizontalen Stützfläche (P1), insbesondere unter der horizontalen Stützfläche (P1), zu bewegen.

12. Trennmaschine nach einem beliebigen der vorhergehenden Ansprüche, wobei die Öffnung (23) einen ersten Abschnitt (24) und einen zweiten Abschnitt (25) umfasst, die auf gegenüberliegenden Seiten der Schneidklinge (17) angeordnet sind.

13. Trennmaschine nach Anspruch 12, wobei die Schneideeinheit (6) außerdem eine Fixierscheibe (19) umfasst, die die Schneidklinge (17) an der Zuführvorrichtung (10, 13) arretiert und den zweiten Abschnitt (25) gleitend in Eingriff nimmt.

14. Trennmaschine nach Anspruch 12 oder 13, wobei die Schneideeinheit (6) eine erste Verschlussklappe (26) zum Schließen des ersten Abschnitts (24) und eine zweite Verschlussklappe (27) zum Schließen des zweiten Abschnitts (25) umfasst.

15. Trennmaschine nach Anspruch 12 oder 13, wobei die Schneideeinheit (6) eine Verschlussklappe umfasst, die die Form einer Gabel aufweist, sich um die Schneidklinge (17) herum erstreckt und zwei Arme zum Schließen des ersten Abschnitts (24) und des zweiten Abschnitts (25) umfasst.

16. Trennmaschine nach einem beliebigen der vorhergehenden Ansprüche, wobei der Stützrahmen (7) eine Aufnahmekammer aufweist, die - im Inneren - die Schneidklinge (17) aufnimmt und an einer pneumatischen Saugvorrichtung angeschlossen ist.

## Revendications

1. Machine de tronçonnage pour tronçonner des profilés, en particulier faits d'aluminium, d'alliages légers, de PVC ou similaires, la machine à tronçonner comprenant une base (2) définissant une surface support horizontale (P1) pour un profilé ; et un dispositif de tronçonnage (6) comprenant, à son tour, un cadre support (7), qui est installé de façon à tourner autour d'un premier axe de rotation (8), une surface support verticale (P2) pour le profilé, qui est disposée sur le cadre support (7) et s'étend sous la surface support horizontale (P1), une lame de coupe circulaire (17), qui est installée sur le cadre support (7) de façon à tourner autour d'un second axe de rotation (18), un dispositif d'alimentation (10, 13) qui est installé sur le cadre support (7) de façon à déplacer la lame de coupe (17) à travers la surface support verticale (P2) dans une première direction d'alimentation (12), et une ouverture (23), qui est disposée à travers la surface support verticale (P2) pour le passage du dispositif d'alimentation (10, 13) ; et qui est **caractérisée en ce que** l'ouverture (23) s'étend au moins partiellement sous la surface support horizontale (P1).

2. Machine de tronçonnage selon la revendication 1, dans laquelle l'ouverture (23) s'étend entièrement sous la surface support horizontale (P1) lorsque le second axe de rotation (18) est parallèle à la surface support horizontale (P1).

3. Machine de tronçonnage selon la revendication 1 ou 2, dans laquelle le dispositif de coupe (6) comprend, en outre, au moins un cache (26, 27) pour fermer ladite ouverture (23).

4. Machine de tronçonnage selon la revendication 3, dans laquelle le cache (26, 27) est mobile entre une position d'ouverture et une position de fermeture pour ouvrir et fermer, respectivement, ladite ouverture (23, 25).

5. Machine de tronçonnage selon la revendication 4, dans laquelle le cache (26, 27) est mobile depuis sa position de fermeture jusqu'à sa position d'ouverture sous l'effet de la poussée du dispositif d'alimentation (10, 13).

6. Machine de tronçonnage selon la revendication 5 et comprenant, en outre, un dispositif de commande pour déplacer le cache (26, 27) depuis sa position d'ouverture jusqu'à sa position de fermeture.

7. Machine de tronçonnage selon la revendication 4 et comprenant, en outre, un dispositif de commande (16, 28) pour déplacer le cache (26, 27) entre sa position d'ouverture et sa position de fermeture.

8. Machine de tronçonnage selon l'une quelconque des revendications précédentes, dans laquelle le dispositif d'alimentation (10, 13) comprend une première glissière (10), qui est mobile dans ladite première direction d'alimentation (12), et une seconde glissière (13), qui est mobile dans une seconde direction d'alimentation (15), qui est essentiellement transversale à la première direction d'alimentation (12).

9. Machine de tronçonnage selon la revendication 8, dans laquelle la première glissière (10) est installée sur le cadre support (7), la seconde glissière (13) est installée sur la première glissière (10), et la lame de coupe (17) est installée sur la seconde glissière (13).

10. Machine de tronçonnage selon la revendication 8 ou 9, dans laquelle le dispositif de coupe (6) comprend, en outre, une plaque de guidage (16), qui est couplée au cadre support (7) d'une manière coulissante, de façon à se déplacer dans la seconde direction d'alimentation (15) sous l'effet de la poussée de la seconde glissière (13), et est engagée par la seconde glissière (13) d'une manière coulissante suivant le mouvement de la première glissière (10) dans la première direction d'alimentation (12).

11. Machine de tronçonnage selon l'une quelconque des revendications 8 à 10 et comprenant, en outre, un dispositif de contrôle électronique (22), qui est configuré pour combiner les mouvements desdites première et seconde glissières (10, 13) dans lesdites première et seconde directions (12, 15) de façon à déplacer sélectivement le second axe de rotation (18) le long de la surface support verticale (P2), en particulier sur l'extérieur de la surface support horizontale (P1), et/ou le long de la surface support horizontale (P1), en particulier sous la surface support horizontale (P1).

12. Machine de tronçonnage selon l'une quelconque des revendications précédentes, dans laquelle l'ouverture (23) comprend une première partie (24) et une seconde partie (25), qui sont agencées sur les côtés opposés de la lame de coupe (17).

13. Machine de tronçonnage selon la revendication 12, dans laquelle le dispositif de coupe (6) comprend, en outre, un disque de fixation (19), qui verrouille la lame de coupe (17) sur le dispositif d'alimentation (10, 13) et engage la seconde partie (25) d'une manière coulissante.

14. Machine de tronçonnage selon la revendication 12 ou 13, dans laquelle le dispositif de coupe (6) comprend un premier cache (26) pour fermer la première partie (24) et un second cache (27) pour fermer la seconde partie (25).

15. Machine de tronçonnage selon la revendication 12 ou 13, dans laquelle le dispositif de coupe (6) comprend un cache, qui a la forme d'une fourchette, s'étend autour de la lame de coupe (17) et comprend deux bras pour fermer la première partie (24) et la seconde partie (25), respectivement.

16. Machine de tronçonnage selon l'une quelconque des revendications précédentes, dans laquelle le cadre support (7) a une enceinte de rétention, qui loge - sur l'intérieur - la lame de coupe (17) et est raccordée à un dispositif d'aspiration pneumatique.
